# EUROPEAN PATENT APPLICATION

(11) **EP 4 678 435 A1**
(43) Date of publication of application: **14.01.2026**
(21) Application number: 25184752.1
(22) Date of filing: 24.06.2025
(51) Int. Cl.: B60K 1/00

(54) **ELECTRIFIED VEHICLE**

(30) Priority: 11.07.2024 JP 2024111715
(71) Applicant: TOYOTA JIDOSHA KABUSHIKI KAISHA, Toyota-shi, Aichi-ken 471-8571 (JP)
(72) Inventor: ITO, Masahiro, Toyota-shi, Aichi-ken,, 471-8571 (JP)
(74) Representative: Winter, Brandl - Partnerschaft mbB

(57) **Abstract**

An electrified vehicle (30) includes: a battery (33); a mechatronic unit (300) including a motor (350) that is a motive power source and an electric power control device (310) configured to supply electricity from the battery (33) to the motor (350); and an auxiliary installed in front of the mechatronic unit (300) in a vehicle front-rear direction. The mechatronic unit (300) and the auxiliary are installed frontward of a vehicle cabin (46) in the vehicle front-rear direction. The auxiliary overlaps the mechatronic unit (300) as seen in a vehicle front view. At least one surface of a surface of the mechatronic unit (300) that faces the auxiliary and a surface of the auxiliary that faces the mechatronic unit (300) is an inclined surface that is inclined so as to ascend toward a rear side in the vehicle front-rear direction.

## Description

### BACKGROUND OF THE INVENTION

### 1. Field of the Invention

The present invention relates to an electrified vehicle.

### 2. Description of Related Art

Japanese Unexamined Patent Application Publication No. 2007-135303 (JP 2007-135303 A) discloses a vehicle including an electric compressor that is an auxiliary in front of a hybrid power unit including a motor.

### SUMMARY OF THE INVENTION

In the event of a frontal collision in which an object collides with the vehicle described in JP 2007-135303 A from a vehicle front side, an impact from the vehicle front side may be exerted on the auxiliary. It is desirable to protect the auxiliary in the event of a frontal collision.

An electrified vehicle according to a first aspect of the present disclosure is an electrified vehicle configured to drive front wheels by electricity stored in a battery. The electrified vehicle includes the battery installed under a floor of a vehicle cabin. The electrified vehicle includes a mechatronic unit including a motor that is a motive power source configured to drive the front wheels and an electric power control device that is configured to supply electricity from the battery to the motor. The electrified vehicle includes an auxiliary that is installed in front of the mechatronic unit in a vehicle front-rear direction. The mechatronic unit and the auxiliary are installed frontward of the vehicle cabin in the vehicle front-rear direction. The auxiliary overlaps the mechatronic unit as seen in a vehicle front view. At least one surface of a surface of the mechatronic unit that faces the auxiliary and a surface of the auxiliary that faces the mechatronic unit is an inclined surface that is inclined so as to ascend toward a rear side in the vehicle front-rear direction.

In this electrified vehicle, the auxiliary can be protected in the event of a frontal collision.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view of a vehicle of an embodiment as seen from a left side;
FIG. 2 is a schematic view showing the configuration of a motor, a planetary gear speed reduction mechanism, and a differential device in a mechatronic unit of the embodiment;
FIG. 3 is a configuration diagram showing a heat management system of the embodiment;
FIG. 4 is an enlarged view showing the front part of the vehicle of the embodiment;
FIG. 5 is an interaction diagram showing movement of an integrated thermal unit in the event of a frontal collision;
FIG. 6 is a sectional view showing the configuration of the integrated thermal unit of a first modified example;
FIG. 7 is a sectional view showing the mechatronic unit and the integrated thermal unit of a second modified example; and
FIG. 8 is a sectional view showing the mechatronic unit and the integrated thermal unit of a third modified example.

### DETAILED DESCRIPTION OF EMBODIMENTS

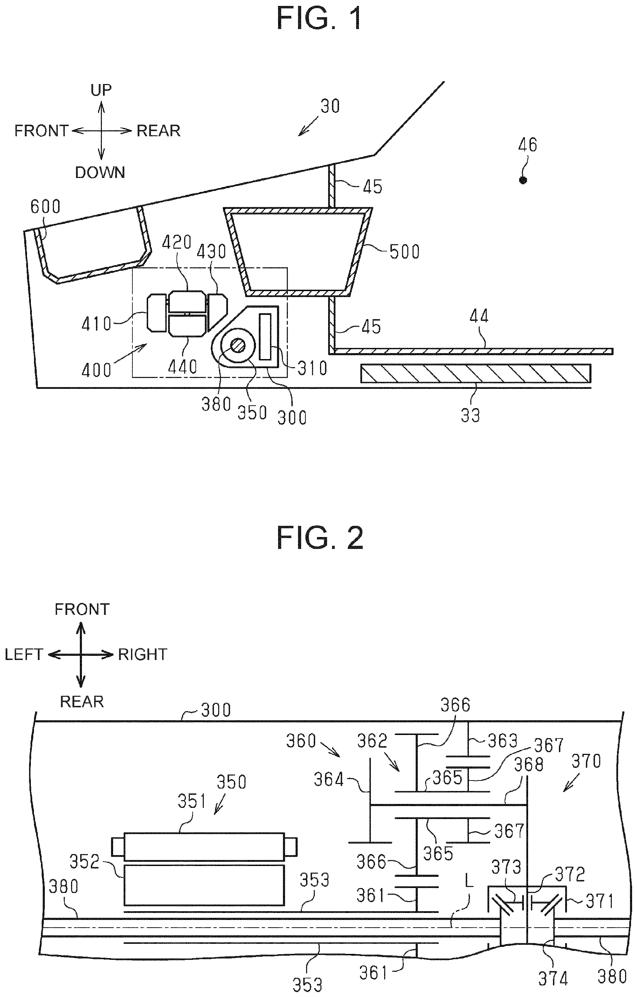

In the following, one embodiment of an electrified vehicle will be described with reference to FIG. 1 to FIG. 5. In the following description, "front," "rear," "left," "right," "up," and "down" mean "front," "rear," "left," "right," "up," and "down" as seen from an occupant in a state of facing a front side in a vehicle front-rear direction. A right-left direction coincides with a vehicle-width direction.

### Internal Structure of Electrified Vehicle 30

As shown in FIG. 1, the electrified vehicle 30 includes a battery 33 and a dashboard panel 45. The dashboard panel 45 divides an internal space of the electrified vehicle 30 into a vehicle cabin 46 and a part frontward of the vehicle cabin 46 in the vehicle front-rear direction. The vehicle cabin 46 is a space that is located on a rear side in the vehicle front-rear direction as seen from the dashboard panel 45. In the electrified vehicle 30, the battery 33 is installed under a floor 44 in the vehicle cabin 46.

The electrified vehicle 30 includes a mechatronic unit 300 and an integrated thermal unit 400 frontward of the dashboard panel 45 in the vehicle front-rear direction. Further, the electrified vehicle 30 includes a heating ventilating and air conditioning (HVAC) 500. The HVAC 500 is installed so as to penetrate a dashboard panel 45. The HVAC 500 is installed so as to straddle the vehicle cabin 46 and the part frontward of the vehicle cabin 46 in the vehicle front-rear direction. The HVAC 500 includes a cooling circuit and a heating circuit. The HVAC 500 sends air of which the temperature has been adjusted by the cooling circuit and the heating circuit to the vehicle cabin 46. The electrified vehicle 30 includes a trunk box 600 that is configured to store baggage.

The mechatronic unit 300 is located frontward of the vehicle cabin 46 in the vehicle front-rear direction and below the HVAC 500 in a vehicle-height direction. The integrated thermal unit 400 is installed frontward of the HVAC 500 in the vehicle front-rear direction. The integrated thermal unit 400 is installed frontward of the mechatronic unit 300 in the vehicle front-rear direction. The trunk box 600 is installed frontward of the integrated thermal unit 400 in the vehicle front-rear direction.

The integrated thermal unit 400 and the mechatronic unit 300 overlap as seen in a vehicle front view. Similarly, a high-voltage heater 430 and an electric compressor 440 that are high-voltage auxiliaries overlap the mechatronic unit 300 as seen in a vehicle front view.

### Configuration of Mechatronic Unit 300

As shown in FIG. 1, the mechatronic unit 300 is a unit incorporating a motor 350, a motive power transmission mechanism (not shown), and an electric power control device 310.

The motor 350 is a motive power source that drives front wheels that are drive wheels through driveshafts 380. The battery 33 stores electricity to be supplied to the motor 350. That is, the electrified vehicle 30 drives the front wheels that are drive wheels by the electricity stored in the battery 33.

The electric power control device 310 is a device that supplies electricity to the motor 350. The electric power control device 310 includes an inverter that converts direct-current electricity from the battery 33 into alternating-current electricity and supplies it to the motor 350.

The mechatronic unit 300 may include, as the electric power control device 310, a device other than the inverter. The mechatronic unit 300 may include, in addition to the inverter, a DC-DC converter that raises the voltage of the direct-current electricity supplied from the battery 33. In that case, the inverter included as the electric power control device 310 converts the direct-current electricity supplied from the DC-DC converter into alternating-current electricity and supplies it to the motor 350. The mechatronic unit 300 may include, as the electric power control device 310, an electronic control unit (ECU) that controls the electricity to be supplied to the motor 350. The ECU includes a CPU and a memory in which programs and data for control are stored. The ECU executes processing relating to various modes of control as the CPU executes the programs stored in the memory.

FIG. 2 is a schematic view showing the mechatronic unit 300. As shown in FIG. 2, the mechatronic unit 300 houses the motor 350, a planetary gear speed reduction mechanism 360, and a differential device 370. In the mechatronic unit 300, the motor 350, the planetary gear speed reduction mechanism 360, and the differential device 370 are installed so as to overlap as seen in a vehicle side view. The planetary gear speed reduction mechanism 360 outputs rotation transmitted from the motor 350 after reducing the speed of the rotation. The differential device 370 transmits the rotation transmitted from the planetary gear speed reduction mechanism 360 to the drive wheels through the right and left driveshafts 380. That is, the planetary gear speed reduction mechanism 360, the differential device 370, and the driveshafts 380 are motive power transmission mechanisms.

The mechatronic unit 300 includes the planetary gear speed reduction mechanism 360 rightward of the motor 350 in the vehicle right-left direction. The mechatronic unit 300 includes the differential device 370 rightward of the planetary gear speed reduction mechanism 360 in the vehicle right-left direction. The mechatronic unit 300 may include the planetary gear speed reduction mechanism 360 leftward of the motor 350 in the vehicle right-left direction. In that case, the mechatronic unit 300 includes the differential device 370 leftward of the planetary gear speed reduction mechanism 360 in the vehicle right-left direction.

### Configuration of Motor 350

The motor 350 includes a stator 351, a rotor 352, and an output shaft 353. The stator 351 is fixed on a case of the mechatronic unit 300. The rotor 352 is rotatable with respect to the stator 351. The output shaft 353 is fixed with respect to the rotor 352.

### Configuration of Planetary Gear Speed Reduction Mechanism 360

The planetary gear speed reduction mechanism 360 includes a sun gear 361, a pinion gear 362, a ring gear 363, and a carrier 364. The sun gear 361 is fixed on the output shaft 353 that protrudes to the right side of the motor 350 in the vehicle right-left direction. The shape of the sun gear 361 is an annular shape with external teeth. The sun gear 361 rotates integrally with the output shaft 353 around a rotational axis L.

The ring gear 363 is fixed on the case of the mechatronic unit 300. The shape of the ring gear 363 is an annular shape with internal teeth. The ring gear 363 is located rightward of the sun gear 361 in the vehicle right-left direction.

The pinion gear 362 includes a pinion shaft 365, a large-diameter pinion gear 366, and a small-diameter pinion gear 367. That is, the pinion gear 362 is a so-called stepped pinion. The large-diameter pinion gear 366 is an externally toothed gear fixed on the pinion shaft 365. The large-diameter pinion gear 366 meshes with the sun gear 361. The small-diameter pinion gear 367 is an externally toothed gear that is fixed on an outer circumferential surface of the pinion shaft 365, at a portion rightward of the large-diameter pinion gear 366 in the vehicle right-left direction. The outside diameter of the small-diameter pinion gear 367 is smaller compared with the outside diameter of the large-diameter pinion gear 366. The small-diameter pinion gear 367 meshes with the ring gear 363. The planetary gear speed reduction mechanism 360 includes three pinion gears 362. In FIG. 2, only one pinion gear 362 is shown as a representative.

The pinion shaft 365 of the pinion gear 362 is rotatably supported by the carrier 364. Specifically, a support shaft 368 of the carrier 364 is passed through the center of the pinion shaft 365. The pinion shaft 365 is supported by the support shaft 368. The shape of the carrier 364 is a disc shape. The pinion gear 362 is rotatable with respect to the carrier 364. That is, the pinion gear 362 is rotatable on its own axis.

The mechatronic unit 300 rotatably supports the carrier 364. That is, the carrier 364 is rotatable with respect to the case of the mechatronic unit 300. The pinion gear 362 is revolvable around the sun gear 361. The carrier 364 is rotatable coaxially with the sun gear 361 as the pinion gear 362 revolves. That is, the carrier 364 rotates around the rotational axis L.

### Configuration of Differential Device 370

The differential device 370 includes a differential case 371, a differential pinion shaft 372, two differential pinion gears 373, and two differential side gears 374. The differential case 371 is integrated with the carrier 364. The differential pinion shaft 372 is provided inside the differential case 371. The differential pinion shaft 372 is orthogonal to the rotational axis L. The differential pinion gears 373 penetrated by the differential pinion shaft 372 and the differential side gears 374 mesh with each other. The right-side differential side gear 374 is connected to the right-side driveshaft 380. The left-side differential side gear 374 is connected to the left-side driveshaft 380.

When the carrier 364 rotates around the rotational axis L, the differential case 371 rotates around the rotational axis L. As the differential case 371 rotates around the rotational axis L, the right and left driveshafts 380 rotate around the rotational axis L through the differential pinion shaft 372, the differential pinion gears 373, and the differential side gears 374. By the above-described gears, the differential device 370 allows a difference to occur in rotation speed between the right and left driveshafts 380. The driveshaft 380 on the left side in the vehicle right-left direction passes through an inside of the output shaft 353. The driveshafts 380 are rotatable with respect to the output shaft 353.

In the mechatronic unit 300 mounted in the electrified vehicle 30, the driveshaft 380 need not be passed through the inside of the output shaft 353 of the motor 350. That is, in the mechatronic unit 300 mounted in the electrified vehicle 30, the motor 350, the planetary gear speed reduction mechanism 360, and the differential device 370 need not be installed so as to overlap as seen in a vehicle side view.

### Configuration of Integrated Thermal Unit 400

As shown in FIG. 1, the integrated thermal unit 400 is a unit incorporating a heat management device 410, a refrigerant module 420, the high-voltage heater 430, and the electric compressor 440.

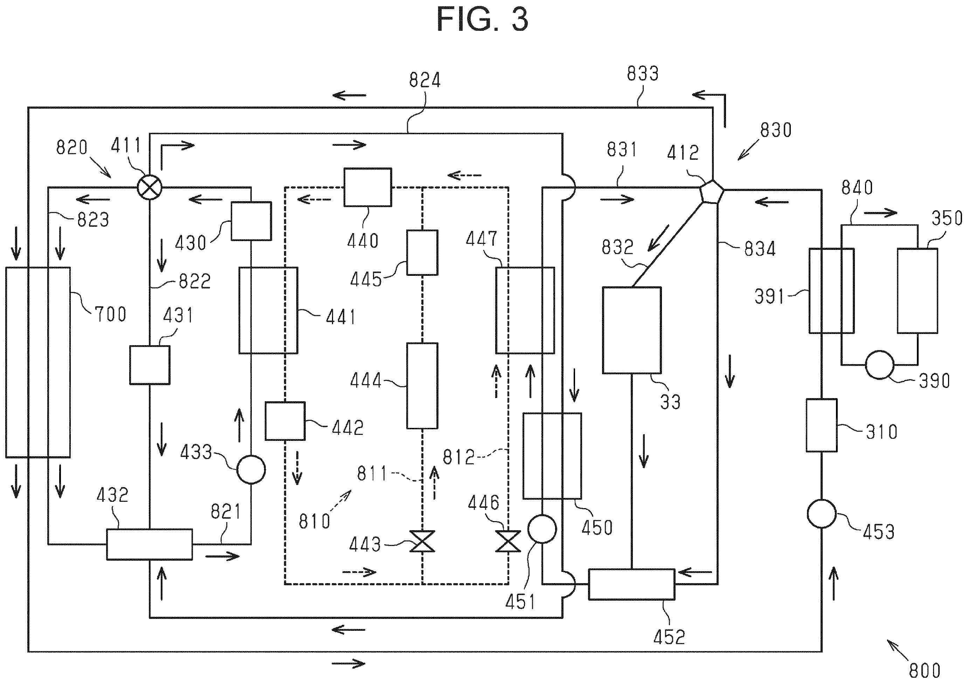

The heat management device 410 is an auxiliary incorporating a four-way valve 411 and a five-way valve 412 shown in FIG. 3. The heat management device 410 may include an ECU that controls the four-way valve 411 and the five-way valve 412.

The refrigerant module 420 is an auxiliary incorporating a water-cooled condenser 441, a first expansion valve 443, a second expansion valve 446, and a chiller 447 shown in FIG. 3. The refrigerant module 420 may include an ECU that controls the first expansion valve 443 and the second expansion valve 446.

The high-voltage heater 430 is an auxiliary that heats a heat medium by electricity supplied from the battery 33. The electric compressor 440 is an auxiliary that compresses a refrigerant by electricity supplied from the battery 33. The high-voltage heater 430 and the electric compressor 440 are high-voltage auxiliaries into which high voltages are input. The integrated thermal unit 400 incorporating the high-voltage heater 430 and the electric compressor 440 is also a high-voltage auxiliary into which a high voltage is input.

The integrated thermal unit 400 is a device constituting a heat management system 800 of the electrified vehicle 30. The heat management system 800 is a system that realizes efficient air conditioning management of the vehicle cabin 46 by the HVAC 500 while keeping the battery 33 and the mechatronic unit 300 at appropriate temperatures.

### Heat Management System 800

As shown in FIG. 3, the heat management system 800 includes a first pipe 810, a second pipe 820, and a third pipe 830. The first pipe 810 includes an evaporator path 811 and a chiller path 812. A refrigerant flows through the first pipe 810. The refrigerant flowing through the first pipe 810 is, for example, a hydrofluorocarbon (HFC)-based refrigerant or a hydrofluoroolefin (HFO)-based refrigerant. The second pipe 820 includes the four-way valve 411, a high-voltage heater path 821, a heater core path 822, a high-temperature radiator path 823, and a heat exchanger path 824. A coolant flows through the second pipe 820 as a heat medium. The third pipe 830 includes a temperature adjustment path 831, the five-way valve 412, a battery path 832, a low-temperature radiator path 833, and a reserve path 834. A coolant flows through the third pipe 830 as a heat medium. The heat medium flowing through the second pipe 820 has a higher temperature than the heat medium flowing through the third pipe 830. An antifreeze liquid may flow through the second pipe 820 and the third pipe 830 as a heat medium. A different type of heat medium may flow through each of the second pipe 820 and the third pipe 830.

### Evaporator Path 811

In the evaporator path 811, the electric compressor 440, the water-cooled condenser 441, a modulator 442, the first expansion valve 443, an evaporator 444, and an evaporator pressure regulator (EPR) 445 are installed. The electric compressor 440 compresses a refrigerant gas and discharges a high-temperature, high-pressure compressed refrigerant gas. The compressed refrigerant gas discharged from the electric compressor 440 flows into the water-cooled condenser 441.

The water-cooled condenser 441 performs heat exchange between the high-temperature, high-pressure compressed refrigerant gas flowing through the evaporator path 811 and the heat medium flowing through the high-voltage heater path 821. The compressed refrigerant gas flowing through the high-voltage heater path 821 has a higher temperature than the heat medium flowing through the high-voltage heater path 821. Therefore, by heat exchange, the water-cooled condenser 441 heats the heat medium flowing through the high-voltage heater path 821 and cools the compressed refrigerant gas flowing through the evaporator path 811. The compressed refrigerant gas condenses by being cooled in the water-cooled condenser 441. As a result, the compressed refrigerant gas turns into a liquid refrigerant. The liquid refrigerant having passed through the water-cooled condenser 441 flows into the modulator 442. The modulator 442 removes air bubbles from the liquid refrigerant.

The liquid refrigerant having passed through the modulator 442 flows into the first expansion valve 443. The first expansion valve 443 expands the high-pressure liquid refrigerant and turns it into a low-pressure liquid refrigerant. The first expansion valve 443 controls the flow rate of the refrigerant flowing into the evaporator 444. The liquid refrigerant having passed through the first expansion valve 443 flows into the evaporator 444.

The evaporator 444 performs heat exchange between the liquid refrigerant and air inside the HVAC 500. That is, the evaporator 444 functions as the cooling circuit in the HVAC 500. The evaporator 444 cools the air inside the HVAC 500 by absorbing heat of the air inside the HVAC 500. The liquid refrigerant having exchanged heat evaporates and turns into a refrigerant gas.

The refrigerant gas having passed through the evaporator 444 flows into the EPR 445. The EPR 445 controls the flow rate of the refrigerant inside the evaporator path 811. Thus, the EPR 445 controls the pressure inside the evaporator 444. The refrigerant gas having passed through the EPR 445 flows into the electric compressor 440.

### Chiller Path 812

The chiller path 812 connects a downstream side of the modulator 442 and a downstream side of the EPR 445 in the evaporator path 811 to each other and bypasses the evaporator 444 and the EPR 445. In the chiller path 812, the second expansion valve 446 and the chiller 447 are installed. The second expansion valve 446 expands a high-pressure liquid refrigerant and turns it into a low-pressure liquid refrigerant. The second expansion valve 446 controls the flow rate of the refrigerant flowing into the chiller 447. The liquid refrigerant having passed through the second expansion valve 446 flows into the chiller 447.

The chiller 447 performs heat exchange between the liquid refrigerant flowing through the chiller path 812 and the heat medium flowing through the temperature adjustment path 831 in the third pipe 830. The liquid refrigerant flowing through the chiller path 812 has a lower temperature than the heat medium flowing through the temperature adjustment path 831 in the third pipe 830. Therefore, by heat exchange, the chiller 447 cools the heat medium flowing through the temperature adjustment path 831 in the third pipe 830 and heats the liquid refrigerant flowing through the chiller path 812. The heated liquid refrigerant evaporates and turns into a refrigerant gas. The refrigerant gas having passed through the chiller 447 flows into the electric compressor 440.

### High-Voltage Heater Path 821

In the high-voltage heater path 821, a reserve tank 432, a pump 433, the water-cooled condenser 441, and the high-voltage heater 430 are installed. In the reserve tank 432, a heat medium is reserved. The pump 433 discharges the heat medium reserved in the reserve tank 432 from the reserve tank 432 toward the water-cooled condenser 441. The heat medium discharged from the pump 433 flows into the water-cooled condenser 441 installed downstream of the pump 433.

The water-cooled condenser 441 performs heat exchange between the heat medium flowing through the high-voltage heater path 821 and the high-temperature, high-pressure compressed refrigerant gas flowing through the evaporator path 811. The heat medium flowing through the high-voltage heater path 821 has a lower temperature than the compressed refrigerant gas flowing through the evaporator path 811. Therefore, by heat exchange, the water-cooled condenser 441 cools the compressed refrigerant gas flowing through the evaporator path 811 and heats the heat medium flowing through the high-voltage heater path 821.

The heat medium having passed through the water-cooled condenser 441 flows into the high-voltage heater 430. The high-voltage heater 430 heats the heat medium flowing through the high-voltage heater path 821 by electricity supplied from the battery 33. The heat medium having passed through the high-voltage heater 430 flows into the four-way valve 411.

The four-way valve 411 is configured to be able to cause the heat medium having flowed in from the high-voltage heater path 821 to diverge into the heater core path 822, the high-temperature radiator path 823, and the heat exchanger path 824. By the four-way valve 411, the heat management system 800 can variably control a ratio of the heat medium diverging into the heater core path 822, a ratio thereof diverging into the high-temperature radiator path 823, and a ratio thereof diverging into the heat exchanger path 824.

### Heater Core Path 822

In the heater core path 822, a heater core 431 is installed. As the heat medium having been heated in the high-voltage heater path 821 flows into the heater core path 822 through the four-way valve 411, the high-temperature heat medium flows into the heater core 431. The heater core 431 performs heat exchange between the heat medium and the air inside the HVAC 500. That is, the heater core 431 functions as the heating circuit in the HVAC 500. The heat medium flowing through the heater core 431 heats the air inside the HVAC 500. After passing through the heater core 431, the heat medium flowing through the heater core path 822 is reserved in the reserve tank 432.

### High-Temperature Radiator Path 823

In the high-temperature radiator path 823, a radiator 700 is installed. The radiator 700 cools the heat medium flowing through the high-temperature radiator path 823 by heat exchange between the heat medium flowing through the high-temperature radiator path 823 and air outside the electrified vehicle 30.

When the heat medium is flowing through the low-temperature radiator path 833 in the third pipe 830 to be described later, the radiator 700 heats the heat medium flowing through the low-temperature radiator path 833 by heat exchange between the heat medium flowing through the high-temperature radiator path 823 and the heat medium flowing through the low-temperature radiator path 833. The heat management system 800 adjusts the flow rate of the heat medium flowing through the low-temperature radiator path 833 by controlling the five-way valve 412 to be described later. After passing through the radiator 700, the heat medium flowing through the high-temperature radiator path 823 is reserved in the reserve tank 432.

### Heat Exchanger Path 824

In the heat exchanger path 824, a heat exchanger 450 is installed. The heat exchanger 450 performs heat exchange between the heat medium flowing through the heat exchanger path 824 and the heat medium flowing through the temperature adjustment path 831 in the third pipe 830. The heat medium flowing through the heat exchanger path 824 has a higher temperature than the heat medium flowing through the temperature adjustment path 831. Therefore, by heat exchange, the heat exchanger 450 heats the heat medium flowing through the temperature adjustment path 831 and cools the heat medium flowing through the heat exchanger path 824. After passing through the heat exchanger 450, the heat medium flowing through the heat exchanger path 824 is reserved in the reserve tank 432.

### Temperature Adjustment Path 831

In the temperature adjustment path 831, a reserve tank 452, a pump 451, the heat exchanger 450, and the chiller 447 are installed. In the reserve tank 452, a heat medium is reserved. The pump 451 discharges the heat medium reserved in the reserve tank 452 toward the heat exchanger 450. The heat medium discharged from the pump 451 flows into the heat exchanger 450 installed downstream of the pump 451.

The heat exchanger 450 performs heat exchange between the heat medium flowing through the temperature adjustment path 831 and the heat medium flowing through the heat exchanger path 824. The heat medium flowing through the temperature adjustment path 831 has a lower temperature than the heat medium flowing through the heat exchanger path 824. Therefore, by heat exchange, the heat exchanger 450 cools the heat medium flowing through the heat exchanger path 824 and heats the heat medium flowing through the temperature adjustment path 831. After passing through the heat exchanger 450, the heat medium flowing through the temperature adjustment path 831 flows into the chiller 447.

The chiller 447 performs heat exchange between the heat medium flowing through the temperature adjustment path 831 and the liquid refrigerant flowing through the chiller path 812. The heat medium flowing through the temperature adjustment path 831 has a higher temperature than the liquid refrigerant flowing through the chiller path 812. Therefore, by heat exchange, the chiller 447 heats the liquid refrigerant flowing through the chiller path 812 and cools the heat medium flowing through the temperature adjustment path 831. The heat medium flowing through the temperature adjustment path 831 has its temperature adjusted by being heated by the heat exchanger 450 and being cooled by the chiller 447. After passing through the chiller 447, the heat medium flowing through the temperature adjustment path 831 flows into the five-way valve 412.

The five-way valve 412 is configured to be able to cause the heat medium having been discharged from the pump 451 and passed through the temperature adjustment path 831 to diverge into the battery path 832, the low-temperature radiator path 833, and the reserve path 834. By the five-way valve 412, the heat management system 800 can variably control a ratio of the heat medium having flowed from the temperature adjustment path 831 into the five-way valve 412 diverging into the battery path 832, a ratio thereof diverging into the low-temperature radiator path 833, and a ratio thereof diverging into the reserve path 834.

### Battery Path 832 and Reserve Path 834

In the battery path 832, the battery 33 is installed. The battery 33 is cooled or heated by heat exchange with the heat medium flowing through the battery path 832. The heat medium having passed through the battery 33 is reserved in the reserve tank 452. In the reserve path 834, the reserve tank 452 is installed. In the reserve tank 452, the heat medium is reserved.

### Low-Temperature Radiator Path 833

In the low-temperature radiator path 833, the radiator 700, a pump 453, the electric power control device 310, and an oil cooler 391 are installed.

The radiator 700 cools the heat medium flowing through the low-temperature radiator path 833 by heat exchange between the heat medium flowing through the low-temperature radiator path 833 and the air outside the electrified vehicle 30.
When the heat medium flowing through the low-temperature radiator path 833 needs to be heated, the heat management system 800 adjusts the flow rate of the heat medium flowing through the high-temperature radiator path 823 by controlling the four-way valve 411. When the heat medium is flowing through the high-temperature radiator path 823, the radiator 700 heats the heat medium flowing through the low-temperature radiator path 833 by heat exchange between the heat medium flowing through the low-temperature radiator path 833 and the heat medium flowing through the high-temperature radiator path 823.

After passing through the radiator 700, the heat medium flowing through the low-temperature radiator path 833 flows into the pump 453. The pump 453 discharges the heat medium flowing through the low-temperature radiator path 833 toward the electric power control device 310. In the low-temperature radiator path 833 downstream of the pump 453, the electric power control device 310 is installed. The electric power control device 310 is heated or cooled by heat exchange with the heat medium flowing through the low-temperature radiator path 833.

In the low-temperature radiator path 833 downstream of the electric power control device 310, the oil cooler 391 is installed. An oil circulation path 840 is connected to the oil cooler 391. The oil cooler 391 heats or cools oil flowing through the oil circulation path 840 by heat exchange between the heat medium flowing through the low-temperature radiator path 833 and the oil flowing through the oil circulation path 840. The oil circulation path 840 is installed so as to pass through an inside of the mechatronic unit 300. The oil circulation path 840 includes an oil pump 390. The oil pump 390 discharges the oil having passed through the mechatronic unit 300 toward the oil cooler 391. When the oil having been cooled in the oil cooler 391 circulates through the oil circulation path 840, the motor 350 included in the mechatronic unit 300 is cooled. The oil circulation path 840 may be installed such that further the planetary gear speed reduction mechanism 360 and the differential device 370 are cooled. The low-temperature radiator path 833 may be installed so as to cool other devices than the electric power control device 310 and the oil cooler 391.

After passing through the oil cooler 391, the heat medium flowing through the low-temperature radiator path 833 flows into the five-way valve 412. That is, the five-way valve 412 is configured such that the heat medium having flowed through the low-temperature radiator path 833 can merge. By the five-way valve 412, the heat management system 800 can variably control a ratio of the heat medium having flowed from the low-temperature radiator path 833 into the five-way valve 412 diverging into the battery path 832, a ratio thereof diverging into the reserve path 834, and a ratio thereof flowing into the low-temperature radiator path 833 again.

### Installation Positions of Mechatronic Unit 300 and Integrated Thermal Unit 400

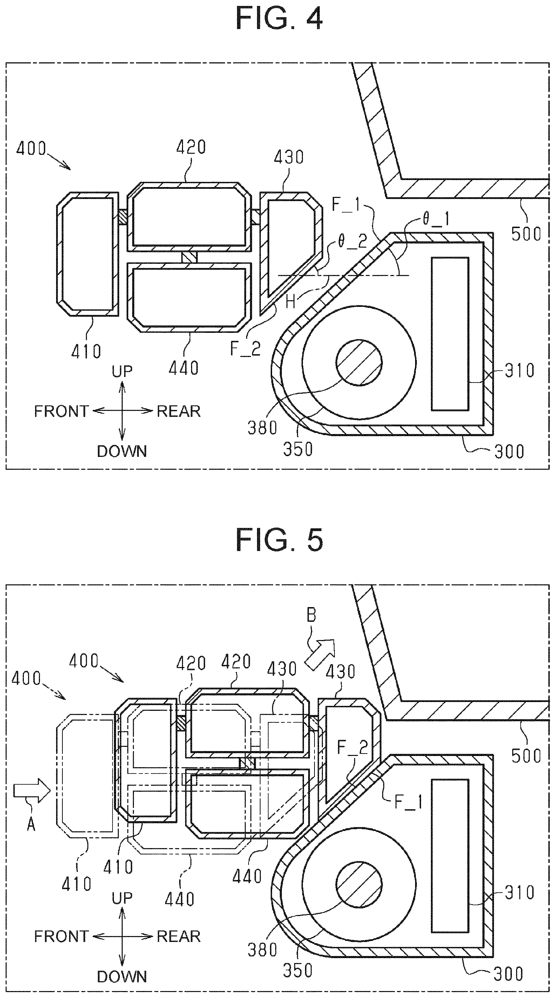

FIG. 4 is an enlarged view showing the front part of the vehicle of the embodiment. As shown in FIG. 4, a surface in the mechatronic unit 300 that faces the integrated thermal unit 400 is a first inclined surface F_1 that is inclined so as to ascend toward the rear side in the vehicle front-rear direction. A surface in the integrated thermal unit 400 that faces the mechatronic unit 300 is a second inclined surface F_2 that is inclined so as to ascend toward the rear side in the vehicle front-rear direction. The second inclined surface F_2 is a surface in the high-voltage heater 430 that faces the mechatronic unit 300. An acute angle θ_1 formed by the first inclined surface F_1 and a horizontal line H and an acute angle θ_2 formed by the second inclined surface F_2 and the horizontal line H are equal angles. The mechatronic unit 300 and the integrated thermal unit 400 are installed in a state of being adjacent to each other such that the first inclined surface F_1 and the second inclined surface F_2 face each other. No other parts are installed between the mechatronic unit 300 and the integrated thermal unit 400. Examples of the other parts include a wire harness that supplies electricity from the battery 33 to the high-voltage heater 430.

### Movement of Integrated Thermal Unit 400 in Event of Frontal Collision

As shown in FIG. 5, when the electrified vehicle 30 collides with an object from the front side, a force A pressing the integrated thermal unit 400 toward the vehicle rear side may act due to an impact from the vehicle front side. In this case, the integrated thermal unit 400 moves toward the rear side in the vehicle front-rear direction. As a result, the second inclined surface F_2 included in the high-voltage heater 430 in the integrated thermal unit 400 comes into contact with the first inclined surface F_1 in the mechatronic unit 300. When the force A pressing the integrated thermal unit 400 toward the vehicle rear side further acts in a state where the integrated thermal unit 400 and the mechatronic unit 300 are in contact with each other, as indicated by arrow B in FIG. 5, the integrated thermal unit 400 moves upward in the vehicle-height direction along the first inclined surface F_1. Thereafter, the integrated thermal unit 400 comes into contact with the HVAC 500.

### Workings of Embodiment

When at least one surface of the surface in the mechatronic unit 300 that faces the integrated thermal unit 400 and the surface in the integrated thermal unit 400 that faces the mechatronic unit 300 is an inclined surface that is inclined so as to ascend toward the rear side in the vehicle front-rear direction, in the event of a frontal collision of the electrified vehicle 30, the integrated thermal unit 400 moves upward in the vehicle-height direction along that inclined surface. The mechatronic unit 300 includes the first inclined surface F_1. In the event of a frontal collision of the electrified vehicle 30, therefore, the integrated thermal unit 400 having come into contact with the mechatronic unit 300 moves upward in the vehicle-height direction along the first inclined surface F_1. Thus, compared with when the integrated thermal unit 400 is pressed toward the mechatronic unit 300 on the vehicle rear side in the event of a frontal collision, the integrated thermal unit 400 is less likely to get caught between the mechatronic unit 300 and the object having collided with the electrified vehicle 30. As a result, in the electrified vehicle 30 described above, damage to the integrated thermal unit 400 that is a high-voltage auxiliary can be mitigated.

### Advantages of Embodiment

(1) In the electrified vehicle 30, the integrated thermal unit 400 that is a high-voltage auxiliary can be protected in the event of a frontal collision.
(2) The surface in the integrated thermal unit 400 that faces the mechatronic unit 300 is the second inclined surface F_2 that is inclined so as to ascend toward the rear side in the vehicle front-rear direction. In the electrified vehicle 30, in the event of a frontal collision, the second inclined surface F_2 in the integrated thermal unit 400 and the first inclined surface F_1 in the mechatronic unit 300 come into contact with each other. That is, surface-to-surface contact occurs. Thus, a load per unit area that is applied to the first inclined surface F_1 when the integrated thermal unit 400 and the mechatronic unit 300 come into contact with each other due to a frontal collision is reduced. Similarly, a load per unit area that is applied to the second inclined surface F_2 when the integrated thermal unit 400 and the mechatronic unit 300 come into contact with each other due to a frontal collision is also reduced. As the load applied per unit area is reduced, in the electrified vehicle 30, damage to the integrated thermal unit 400 and the mechatronic unit 300 when the integrated thermal unit 400 and the mechatronic unit 300 come into contact with each other due to a frontal collision can be mitigated.
(3) In the electrified vehicle 30, the HVAC 500 is installed so as to penetrate the dashboard panel 45, and is installed so as to straddle the vehicle cabin 46 and the part in front of the vehicle cabin 46 in the vehicle front-rear direction. The integrated thermal unit 400 is installed frontward of the HVAC 500 in the vehicle front-rear direction. The mechatronic unit 300 is located frontward of the vehicle cabin 46 in the vehicle front-rear direction and below the HVAC 500 in the vehicle-height direction. When the integrated thermal unit 400 moves upward in the vehicle-height direction along the first inclined surface F_1 in the event of a frontal collision, the integrated thermal unit 400 comes into contact with the HVAC 500 at a position frontward of the vehicle cabin 46. Thus, in the electrified vehicle 30, the integrated thermal unit 400 that has moved upward in the vehicle-height direction can be restrained from entering the vehicle cabin 46.
(4) The electrified vehicle 30 includes, as a high-voltage auxiliary, the electric compressor 440 that compresses the refrigerant by electricity supplied from the battery 33. In the electrified vehicle 30, in the event of a frontal collision, the electric compressor 440 moves upward in the vehicle-height direction along the first inclined surface F_1 in the mechatronic unit 300. Thus, in the event of a frontal collision, the electric compressor 440 is less likely to get caught between the mechatronic unit 300 and the object that has collided with the electrified vehicle 30. As a result, in the electrified vehicle 30, damage to the electric compressor 440 that is a high-voltage auxiliary in the event of a frontal collision can be mitigated.
(5) The electrified vehicle 30 includes, as a high-voltage auxiliary, the high-voltage heater 430 that heats the heat medium flowing through the high-voltage heater path 821 by electricity supplied from the battery 33. In the electrified vehicle 30, in the event of a frontal collision, the high-voltage heater 430 moves upward in the vehicle-height direction along the first inclined surface F_1 in the mechatronic unit 300. Thus, in the electrified vehicle 30, in the event of a frontal collision, the high-voltage heater 430 is less likely to get caught between the mechatronic unit 300 and the object that has collided with the electrified vehicle 30. As a result, in the electrified vehicle 30, damage to the high-voltage heater 430 that is a high-voltage auxiliary in the event of a frontal collision can be mitigated.
(6) The electrified vehicle 30 includes a trunk box 600 that serves to store baggage. The trunk box 600 is installed frontward of the integrated thermal unit 400 in the vehicle front-rear direction. The trunk box 600 absorbs part of an impact in the event of a frontal collision. Thus, in the electrified vehicle 30, compared with a vehicle that does not include the trunk box 600, an impact exerted on the integrated thermal unit 400 in the event of a frontal collision is reduced. As a result, in the electrified vehicle 30, the integrated thermal unit 400 that is a high-voltage auxiliary can be protected from an impact in the event of a frontal collision.

### Modified Examples

The embodiment can be implemented with modifications made thereto as follows. The embodiment and the following modified examples can be implemented in combination within such a range that no technical contradiction arises.

The angles of the acute angle θ_1 formed by the first inclined surface F_1 in the mechatronic unit 300 and the horizontal line H and the acute angle θ_2 formed by the second inclined surface F_2 in the integrated thermal unit 400 installed in front of the mechatronic unit 300 in the vehicle front-rear direction and the horizontal line H may be different from each other. Also in that case, in the electrified vehicle 30, the first inclined surface F_1 and the second inclined surface F_2 come into contact with each other in the event of a frontal collision. Thus, in the electrified vehicle 30, damage to the integrated thermal unit 400 and the mechatronic unit 300 can be mitigated.

### First Modified Example

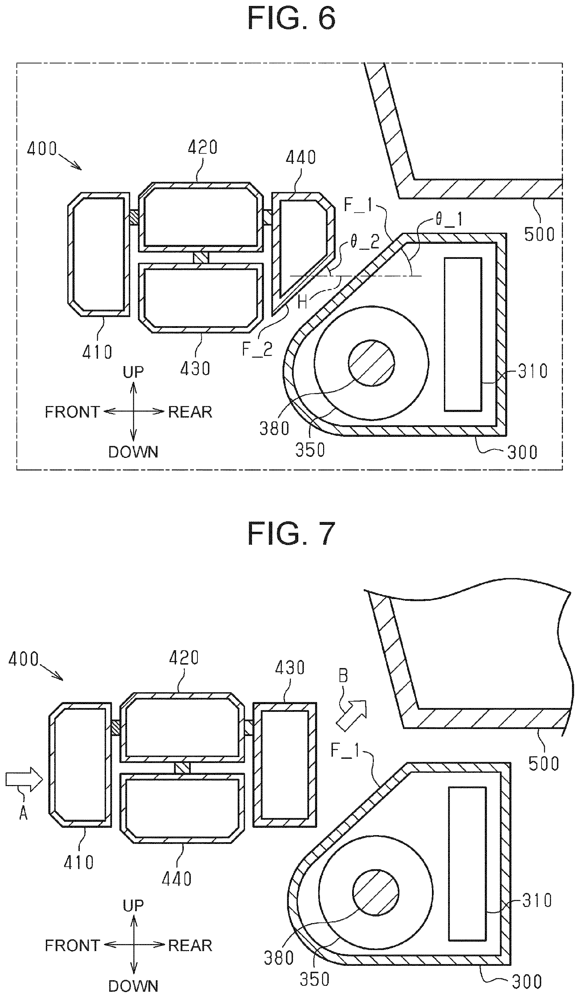

The high-voltage auxiliary including the second inclined surface F_2 in the electrified vehicle 30 is not limited to the high-voltage heater 430. As shown in FIG. 6, in the integrated thermal unit 400 of a first modified example, the electric compressor 440 that is a high-voltage auxiliary may be installed at a position facing the mechatronic unit 300. The electric compressor 440 may include the second inclined surface F_2.

### Second Modified Example

As long as at least one surface of the surface in the mechatronic unit 300 that faces the integrated thermal unit 400 and the surface in the integrated thermal unit 400 that faces the mechatronic unit 300 is an inclined surface that is inclined so as to ascend toward the rear side in the vehicle front-rear direction, the surface in the integrated thermal unit 400 that faces the mechatronic unit 300 need not include the inclined surface. For example, as shown in FIG. 7, in the mechatronic unit 300 of a second modified example, the surface in the mechatronic unit 300 that faces the integrated thermal unit 400 is the first inclined surface F_1 that is inclined so as to ascend toward the rear side in the vehicle front-rear direction. The integrated thermal unit 400 of the second modified example that is installed in front of the mechatronic unit 300 in the vehicle front-rear direction does not include an inclined surface in the surface facing the mechatronic unit 300. When the electrified vehicle 30 collides with an object from the front side, a force A pressing the integrated thermal unit 400 toward the vehicle rear side may act due to an impact from the vehicle front side. In this case, the integrated thermal unit 400 moves toward the vehicle rear side. As a result, the high-voltage heater 430 in the integrated thermal unit 400 comes into contact with the first inclined surface F_1 in the mechatronic unit 300. When the force A pressing the integrated thermal unit 400 toward the vehicle rear side further acts in the state where the integrated thermal unit 400 and the mechatronic unit 300 are in contact with each other, as indicated by arrow B, the integrated thermal unit 400 moves upward in the vehicle-height direction along the first inclined surface F_1. Thus, compared with when the integrated thermal unit 400 is pressed toward the mechatronic unit 300 on the vehicle rear side in the event of a frontal collision, the integrated thermal unit 400 is less likely to get caught between the mechatronic unit 300 and the object that has collided with the electrified vehicle 30. As a result, in the electrified vehicle 30 described above, damage to the integrated thermal unit 400 that is a high-voltage auxiliary can be mitigated.

### Third Modified Example

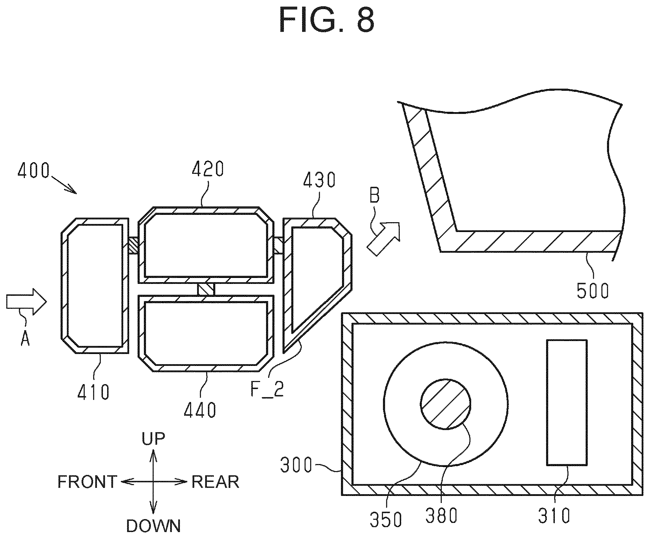

As long as at least one surface of the surface in the mechatronic unit 300 that faces the integrated thermal unit 400 and the surface in the integrated thermal unit 400 that faces the mechatronic unit 300 is an inclined surface that is inclined so as to ascend toward the rear side in the vehicle front-rear direction, the surface in the mechatronic unit 300 that faces the integrated thermal unit 400 need not include the inclined surface. For example, as shown in FIG. 8, in the integrated thermal unit 400 of a third modified example, the surface in the integrated thermal unit 400 that faces the mechatronic unit 300 is the second inclined surface F_2 that is inclined so as to ascend toward the rear side in the vehicle front-rear direction. The mechatronic unit 300 of the third modified example that is installed behind the integrated thermal unit 400 in the vehicle front-rear direction does not include an inclined surface in the surface facing the integrated thermal unit 400. When the electrified vehicle 30 collides with an object from the front side, a force A pressing the integrated thermal unit 400 toward the rear side in the vehicle front-rear direction may act due to an impact from the vehicle front side. In this case, the integrated thermal unit 400 moves toward the rear side in the vehicle front-rear direction. As a result, the second inclined surface F_2 provided in the high-voltage heater 430 in the integrated thermal unit 400 comes into contact with the mechatronic unit 300. When the force A pressing the integrated thermal unit 400 toward the vehicle rear side further acts in a state where the second inclined surface F_2 and the mechatronic unit 300 are in contact with each other, as indicated by arrow B in FIG. 8, the integrated thermal unit 400 moves upward in the vehicle-height direction as it moves toward the rear side in the vehicle front-rear direction. Thus, compared with when the integrated thermal unit 400 is pressed toward the mechatronic unit 300 on the rear side in the vehicle front-rear direction in the event of a frontal collision, the integrated thermal unit 400 is less likely to get caught between the mechatronic unit 300 and the object that has collided with the electrified vehicle 30. As a result, in the electrified vehicle 30 described above, damage to the integrated thermal unit 400 that is a high-voltage auxiliary can be mitigated.

### When Components Other than Integrated Thermal Unit 400 Include Inclined Surface

The high-voltage auxiliary that is installed in front of the mechatronic unit 300 in the vehicle front-rear direction and overlaps the mechatronic unit 300 as seen in a vehicle front view is not limited to the integrated thermal unit 400. For example, the high-voltage auxiliary that is installed in front of the mechatronic unit 300 in the vehicle front-rear direction may be only the high-voltage heater 430. As long as at least one surface of the surface in the mechatronic unit 300 that faces the high-voltage heater 430 and the surface in the high-voltage heater 430 that faces the mechatronic unit 300 is an inclined surface that is inclined so as to ascend toward the rear side in the vehicle front-rear direction, in the electrified vehicle 30, damage to the high-voltage heater 430 in the event of a frontal collision can be mitigated. For example, the high-voltage auxiliary that is installed in front of the mechatronic unit 300 in the vehicle front-rear direction may be only the electric compressor 440. As long as at least one surface of the surface in the mechatronic unit 300 that faces the electric compressor 440 and the surface in the electric compressor 440 that faces the mechatronic unit 300 is an inclined surface that is inclined so as to ascend toward the rear side in the vehicle front-rear direction, in the electrified vehicle 30, damage to the electric compressor 440 in the event of a frontal collision can be mitigated.

The auxiliary that is installed in front of the mechatronic unit 300 in the vehicle front-rear direction and overlaps the mechatronic unit 300 as seen in a vehicle front view is not limited to a high-voltage auxiliary. For example, an auxiliary that operates as low-voltage electricity is supplied thereto, like the ECU that controls the four-way valve 411 and the five-way valve 412, may be installed in front of the mechatronic unit 300 in the vehicle front-rear direction. In this case, as long as at least one surface of the surface in the mechatronic unit 300 that faces the auxiliary and the surface in the auxiliary that faces the mechatronic unit 300 is an inclined surface that is inclined so as to ascend toward the rear side in the vehicle front-rear direction, in the electrified vehicle 30, this auxiliary can be protected from an impact resulting from a frontal collision.

### Other Modified Examples

As long as at least one surface of the surface in the mechatronic unit 300 that faces the auxiliary and the surface in the auxiliary that faces the mechatronic unit 300 is an inclined surface that is inclined so as to ascend toward the rear side in the vehicle front-rear direction, the electrified vehicle 30 need not include the trunk box 600. Also in that case, in the event of a frontal collision, the auxiliary that is installed in front of the mechatronic unit 300 in the vehicle front-rear direction moves along the inclined surface provided in the mechatronic unit 300. Thus, in the electrified vehicle 30, damage to the auxiliary due to the auxiliary getting caught between the mechatronic unit 300 and the object that has collided with the electrified vehicle 30 can be mitigated.

The refrigerant module 420 should include at least one of the water-cooled condenser 441, the first expansion valve 443, the second expansion valve 446, and the chiller 447. For example, the refrigerant module 420 may include only the first expansion valve 443. In that case, in the electrified vehicle 30, the water-cooled condenser 441, the second expansion valve 446, and the chiller 447 are installed at positions other than in the refrigerant module 420.

The electrified vehicle 30 may include, in addition to the battery 33, an auxiliary battery that supplies electricity to auxiliaries. This auxiliary battery may be configured to be able to supply electricity to high-voltage auxiliaries. For example, the integrated thermal unit 400 may be supplied with electricity from this auxiliary battery. For example, the high-voltage heater 430 may be supplied with electricity from this auxiliary battery. For example, the electric compressor 440 may be supplied with electricity from this auxiliary battery. This auxiliary battery may be configured to be able to supply electricity to auxiliaries that operate as low-voltage electricity is supplied thereto. For example, the ECU that controls the four-way valve 411 and the five-way valve 412 may be supplied with electricity from this auxiliary battery.

As long as at least one surface of the surface in the mechatronic unit 300 that faces the auxiliary and the surface in the auxiliary that faces the mechatronic unit 300 is an inclined surface that is inclined so as to ascend toward the rear side in the vehicle front-rear direction, the mechatronic unit 300 mounted in the electrified vehicle 30 need not be integrated with the motive power transmission mechanism. In the case where the mechatronic unit 300 does not include the motive power transmission mechanism, the electrified vehicle 30 includes each of the mechatronic unit 300 and the motive power transmission mechanism that transmits the rotative power of the motor 350 to the front wheels that are drive wheels.

### Supplement

Technical ideas that can be grasped from the above-described embodiment and modified examples will be described.

### Supplement 1

An electrified vehicle configured to drive front wheels by electricity stored in a battery, the electrified vehicle including: the battery installed under a floor of a vehicle cabin; a mechatronic unit including a motor that is a motive power source configured to drive the front wheels and an electric power control device that is configured to supply the electricity of the battery to the motor; and an auxiliary that is installed in front of the mechatronic unit in a vehicle front-rear direction. The mechatronic unit and the auxiliary are installed frontward of the vehicle cabin in the vehicle front-rear direction. The auxiliary overlaps the mechatronic unit as seen in a vehicle front view, and at least one surface of a surface of the mechatronic unit that faces the auxiliary and a surface of the auxiliary that faces the mechatronic unit is an inclined surface that is inclined so as to ascend toward a rear side in the vehicle front-rear direction.

### Supplement 2

The electrified vehicle according to Supplement 1, wherein the auxiliary is a high-voltage auxiliary configured to be supplied with electricity from the battery.

### Supplement 3

The electrified vehicle according to Supplement 1 or Supplement 2, wherein the mechatronic unit further includes a motive power transmission mechanism configured to transmit rotative power of the motor to the front wheels.

### Supplement 4

The electrified vehicle according to any one of Supplement 1 to Supplement 3 further includes an HVAC that includes a cooling circuit and a heating circuit and is configured to send air of which the temperature has been adjusted to the vehicle cabin. The HVAC is installed so as to penetrate a dashboard panel. The HVAC is installed so as to straddle the vehicle cabin and a part in front of the vehicle cabin in the vehicle front-rear direction by penetrating a dashboard panel. The auxiliary is installed frontward of the HVAC in the vehicle front-rear direction. The mechatronic unit is located frontward of the vehicle cabin in the vehicle front-rear direction and below the HVAC in a vehicle-height direction.

### Supplement 5

The electrified vehicle according to any one of Supplement 1 to Supplement 4, wherein the high-voltage auxiliary that is supplied with electricity from the battery is an electric compressor configured to compress a refrigerant by the electricity supplied from the battery.

### Supplement 6

The electrified vehicle according to any one of Supplement 1 to Supplement 5, wherein the high-voltage auxiliary that is supplied with electricity from the battery is a high-voltage heater configured to heat a heat medium flowing through a pipe by electricity supplied from the battery.

### Supplement 7

The electrified vehicle according to any one of Supplement 1 to Supplement 4, wherein the high-voltage auxiliary is an integrated thermal unit including an electric compressor configured to compress a refrigerant by electricity supplied from the battery and a high-voltage heater configured to heat a heat medium flowing through a pipe by electricity supplied from the battery.

### Supplement 8

The electrified vehicle according to any one of Supplement 1 to Supplement 7 further includes a trunk box that is configured to store baggage and is disposed frontward of the auxiliary in the vehicle front-rear direction.

### Supplement 9

The electrified vehicle according to Supplement 1, wherein the surface of the mechatronic unit that faces the auxiliary and the surface of the auxiliary that faces the mechatronic unit are inclined surfaces that are inclined so as to ascend toward the rear side in the vehicle front-rear direction, and are parallel to each other.

## Claims

1. An electrified vehicle (30) configured to drive front wheels by electricity stored in a battery (33), the electrified vehicle (30) comprising:
the battery (33) installed under a floor (44) of a vehicle cabin (46);
a mechatronic unit (300) including a motor (350) that is a motive power source configured to drive the front wheels, and an electric power control device (310) that is configured to supply electricity from the battery (33) to the motor (350); and
an auxiliary that is installed in front of the mechatronic unit (300) in a vehicle front-rear direction, wherein:
the mechatronic unit (300) and the auxiliary are installed frontward of the vehicle cabin (46) in the vehicle front-rear direction;
the auxiliary overlaps the mechatronic unit (300) as seen in a vehicle front view; and
at least one surface of a surface of the mechatronic unit (300) that faces the auxiliary and a surface of the auxiliary that faces the mechatronic unit (300) is an inclined surface that is inclined so as to ascend toward a rear side in the vehicle front-rear direction.

2. The electrified vehicle (30) according to claim 1, wherein the auxiliary is a high-voltage auxiliary configured to be supplied with electricity from the battery (33).

3. The electrified vehicle (30) according to claim 1, wherein the mechatronic unit (300) further includes a motive power transmission mechanism configured to transmit rotative power of the motor (350) to the front wheels.

4. The electrified vehicle (30) according to claim 2, further comprising an HVAC (500) that includes a cooling circuit and a heating circuit and is configured to send air of which temperature has been adjusted to the vehicle cabin (46), wherein:
the HVAC (500) is installed so as to penetrate a dashboard panel (45), and is installed so as to straddle the vehicle cabin (46) and a part in front of the vehicle cabin (46) in the vehicle front-rear direction;
the auxiliary is installed frontward of the HVAC (500) in the vehicle front-rear direction; and
the mechatronic unit (300) is located frontward of the vehicle cabin (46) in the vehicle front-rear direction and below the HVAC (500) in a vehicle-height direction.

5. The electrified vehicle (30) according to claim 2, wherein the high-voltage auxiliary is an electric compressor (440) configured to compress a refrigerant by electricity supplied from the battery (33).

6. The electrified vehicle (30) according to claim 2, wherein the high-voltage auxiliary is a high-voltage heater (430) configured to heat a heat medium flowing through a pipe by electricity supplied from the battery (33).

7. The electrified vehicle (30) according to claim 2, wherein the high-voltage auxiliary is an integrated thermal unit (400) including an electric compressor (440) configured to compress a refrigerant by electricity supplied from the battery (33) and a high-voltage heater (430) configured to heat a heat medium flowing through a pipe by electricity supplied from the battery (33).

8. The electrified vehicle (30) according to claim 1, further comprising a trunk box (600) that is configured to store baggage and is disposed frontward of the auxiliary in the vehicle front-rear direction.

9. The electrified vehicle (30) according to claim 1, wherein the surface of the mechatronic unit (300) that faces the auxiliary and the surface of the auxiliary that faces the mechatronic unit (300) are inclined surfaces that are inclined so as to ascend toward the rear side in the vehicle front-rear direction, and are parallel to each other.
